# NEUE EUROPÄISCHE PATENTSCHRIFT

(11) **EP 1 954 421 B2**
(45) Veröffentlichungstag und Bekanntmachung des Hinweises auf die Entscheidung über den Einspruch: **13.07.2016**
(45) Hinweis auf die Patenterteilung: 15.06.2011
(21) Anmeldenummer: 06805506.0
(22) Anmeldetag: 10.11.2006
(51) Int. Cl.: B21D 53/78, B24C 1/10

(54) **VERFAHREN ZUM HERSTELLEN VON METALLISCHEN BAUTEILEN, INSBESONDERE FÜR TURBOMASCHINEN, MIT KLEINEN KANTENRADIEN**
METHOD FOR PRODUCING METALLIC COMPONENTS, PARTICULARLY FOR TURBO MACHINES, HAVING SMALL EDGE RADII
PROCEDE DE FABRICATION DE PIECES METALLIQUES, EN PARTICULIER POUR DES TURBOMACHINES, A PETITS RAYONS D'ARETES

(30) Priorität: 17.11.2005 DE 102005054866
(43) Veröffentlichungstag der Anmeldung: 13.08.2008
(73) Patentinhaber: MTU Aero Engines GmbH, 80995 München (DE)
(72) Erfinder: DAUTL, Thomas, 85285 Weichs (DE); PESCHKE, Thomas, 82194 Gröbenzell (DE); WINKLER, Alexander, 74861 Neudenau (DE)
(74) Vertreter: Schlotter, Alexander Carolus Paul
(86) Internationale Anmeldenummer: PCT/DE2006/001972
(87) Internationale Veröffentlichungsnummer: WO 2007/056978

(56) Entgegenhaltungen:
- EP-A1- 1 101 568
- EP-A2- 1 621 288
- DE-A1- 10 258 920
- DE-A1- 10 319 020
- DE-T2- 60 008 482
- DE-T2- 60 017 681
- US-A- 4 426 867
- Auszug aus "Heat treating" including Advances in Surface Engineering Feb. 2001

## Beschreibung

Die Erfindung betrifft ein verfahren zum Herstellen von metallischen Bauteilen, insbesondere fürTurbomaschinen, mit Kantenradien < 0,3 mm gemäß dem Oberbegriff des Anspruchs 1 (siehe z.B. EP-A-1 101 568).

Das Verrunden von Kanten an Bauteilen, insbesondere von Turbomaschinen, kann aus verschiedensten Gründen erforderlich sein. Hierzu zählen die Verbesserung der Festigkeit und/oder Aerodynamik sowie die Vermeidung von Verletzungsgefahr. In Abhängigkeit vom Bauteil kann es sich dabei um scharfe Kanten an Bauteilen handeln, die mit angrenzenden Oberflächen des Bauteils verbunden sind. Alternativ können die Kanten auch ebene oder räumliche Flächen bilden, die angrenzende, im Allgemeinen erheblich größere Oberflächen des Bauteils verbinden. Der letztgenannte Fall liegt üblicherweise bei relativ grob vorgefertigten Kanten an strömungsmechanisch wirksamen Schaufeln von Turbomaschinen, insbesondere an Leit- und Laufschaufeln von Gasturbinen, vor, bei dem die Schaufelkanten zur angrenzenden Druck- und/oder Saugseite der Schaufel aus Festigkeits- und Aerodynamikaspekten zu verbinden sind.

Das Verrunden wird im Fall von Schaufelkanten, welche fertigungsbedingt im allgemeinen nur relativ grob vorbearbeitet sind, bis dato weitgehend in Handarbreit ausgeführt, wobei ggf. handgeführte Maschinen, wie Bandschleifer etc., eingesetzt werden. Dies ist mit einem hohen Personal- und Zeitaufwand verbunden, wobei auch mit gezielter Kontrolle und Prüfung letztlich kein reproduzierbares, gleichbleibendes Bearbeitungsergebnis gewährleistet ist. Es ist bekannt, Schaufeloberflächen vor Beschichtungsvorgängen durch abrasives Strahlen aufzurauen, um die Oberflächen zu reinigen und die Haftung zur Schicht zu verbessern.

Aus der DE 103 19 020 A1 ist ein Verfahren und eine Vorrichtung zum Verrunden von Kanten an Bauteilen, insbesondere von Turbomaschinen, bekannt, wobei eine Kante zu wenigstens zwei angrenzenden Oberflächen des Bauteils hin zu verrunden ist. Ein großteils aus abrasiven Partikeln bestehender Strahl wird mit seiner Mitte etwa tangential zur Winkelhalbierenden zwischen zwei Oberflächen an der Kante gelenkt und mit definiertem Vorschub in der weise relativ zum Bauteil längs der Kante bewegt, dass ein definierter Abtrag des Bauteilmaterials unter Verrundung zu den Oberflächen hin erfolgt.

Das oben genannte Dokument EP 1 101 568 A1 betrifft ein Verfahren sowie eine Vorrichtung zum Ultraschall-Kugelstrahlen von Turbinenmaschinen-Bauteilen, insbesondere von Schaufeln und von integral beschaufelten Rotoren. Die an einem Rad lösbar befestigten Schaufeln bzw. die mit einem Rotor integral verbundenen Schaufeln werden durch Drehung des Rades bzw. des Rotors kontinuierlich durch mindestens eine aktive Strahlkammer mit durch Ultraschall beschleunigten Strahlkugeln und durch mindestens zwei inaktive, der Abdichtung und Kugelrückführung dienende Kammem bewegt. Dabei werden die Schaufelblätter allseitig, also auch im Bereich ihrer Kanten, mit der mechanischen Strahlenergie beaufschlagt. Das Dokument gibt keine Hinweise über die konkrete geometrische Beschaffenheit der Schaufelblätter.

Angesichts dieser bekannten Verfahren und ihrer Nachteile bzw. ihrer anwendungstechnischen Grenzen besteht die Aufgabe der Erfindung darin, ein Verfahren zum Herstellen von metallischen Bauteilen, insbesondere für Turbomaschinen, mit Kantenradien < 0,3 mm bereitzustellen, welches durch eine maschinelle, ggf. automatisierbare Arbeitsweise eine erhebliche Zeit- und Personaleinsparung ermöglicht und zu reproduzierbaren Ergebnissen führt. Letztere sollen möglichst qualitativ einwandfrei bei möglichst kleiner Ausschussrate sein.

Diese Aufgabe wird durch das erfindungsgemäße verfahren mit den Merkmalen des Patentanspruchs 1 gelöst. Vorteilhafte Ausführungsformen und Weiterbildungen der Erfindung sind in den abhängigen Ansprüchen angegeben.

Das erfindungsgemäße Verfahren zum Herstellen von metallischen Bauteilen, insbesondere fürTurbomaschinen, mit Kantenradien < 0,3 mm, weist dabei folgende Schritte auf:
Mechanisches und/oder elektrochemisches Bearbeiten eines Bauteils unter Erstellung eines Kantenradius <0,3 mm;
Verfestigen des kleinen Kantenradius durch Ultraschall-Kugelstrahlen.

Erfingdungsgemäß sind in Bereichen, die verfestigungsgestrahlt werden, Kantenradien mit mindestens 0,05 mm definiert. Dadurch ergibt sich faktisch keine Materialverschiebung. Bei dem vorgeschlagenen Verfahren ist eine Minimalangabe der Kanten bzw. Radiengeometrie ausreichend. Durch die erfindungsgemäße Verbindung der Herstellung kleiner und kleinster Kanten-Radiengeometrien und dem unselektiven Ultraschallkugelstrahlen mit runden Kugeln in Kugellagerqualität wird eine reproduzierbare und optimale Fertigungsqualität erzielt.

Durch das erfindungsgemäße Verfahren werden kleine und kleinste Radien verfestigt und eine Kostenreduktion von etwa 50% erzielt, da die sonst üblichen Herstellungskosten zum Fertigen eines Radius von mindestens 0,3 mm entfallen. Außerdem wird die Prozessstabilität wesentlich erhöht und die Bildung von Materialverschiebungen wirksam verhindert. Schließlich wird bei Bauteilen, wie beispielsweise Triebwerkaschaufelfüßen, derTragflächenanteil erhöht.

Eine vorteilhafte Weiterbildung des erfindungsgemäßen Verfahrens sieht dabei vor, dass beim Ultraschall-Kugelstrahlen eine Frequenz von 18 kHz bis 20 kHz Verwendung findet. Als vorteilhaft haben sich in Versuchen Frequenzen von unter 20 kHz erwiesen.

Eine weltere vorteilhafte Weiterbildung des erfindungsgemäßen Verfahrens sleht dabel vor, dass beim Ultraschall-Kugelstrahlen eine Vibrationsamplitude von 40 - 80 µm Verwendung findet Hier haben Versuche gezeigt, dass eine Vibrationsamplitude von 40 µm besonders gute verfestigungsergebnisse an den Kantenradien erzeugt.

Eine weitere vorteilhafte Weiterbildung des erfindungsgemäßen Verfahrens sieht dabei vor, dass die Dauer des Ultraschall-Kugelstrahlens pro Strahlbereich 20 sek. bis 30 min, vorzugsweise 5 min bis 15 min beträgt. Die Dauer hängt dabei zu einen großen Tell von dem zu verfestigenden Bauteilmaterial ab,

Eine weitere vorteilhafte Weiterbildung des erfindungsgemäßen Verfahrens sieht dabei vor, dass beim Ultraschall-Kugelstrahien eine Kugelgröße von 0,3 mm bis 2 mm Verwendung findet. Auch hier spielt bei der Wahl der Kugelgröße das zu verfestigende Bauteilmaterial und die Bauteilgröße eine Rolle.

Eine weitere vorteilhafte Weiterbildung des erfindungsgemäßen Verfahrens sieht vor, dass beim Ultraschall-Kugelstrahlen eine Kugelhärte von bis zu 70 HRC Verwendung findet. Dies entspricht etwa Kugellagerqualität.

Eine weitere vorteilhafte Weiterbildung des erfindungsgemäßen Verfahrens sieht dabei vor, dass beim Ultraschall-Kugelstrahlen eine Kugelmasse von 1 g bis 100 g pro Baurteil Verwendung findet. Die Kugelfüllung des Gehäuses der ultraschallkugelstrahlvorrichtung sollte aber nicht zu dicht sein, damit entsprechende Schwingung der Kugeln möglich bleibt.

Eine weitere vorteilhafte Weiterbildung des erfindungsgemäßen Verfahrens sieht vor, dass die zu verfestigenden ein/mehrere Bauteil(e) in ein Gehäuse eingelegt/eingespannt/ werden. Je nach Bauteil können auch nur einzelne Abschnitte oder Bereiche verfestigungsgestrahlt werden.

Eine weitere vorteilhafte Weiterbildung des erfindungsgemäßen Verfahrens sieht vor, dass das Gehäuse ein Volumen von 15 mm³ bis 8 m³, vorzugsweise von 1 m³ bis 3 m³ aufweist. Die Gehäuseabmessungen sind dabei direkt von den Bauteilgrößen abhängig.

Eine weitere vorteilhafte Weiterbildung des erfindungsgemäßen Verfahrens sieht vor, dass beim Ultraschall-Kugelstrahlen Kugeln aus Stahl, aus Wolframcarbid, aus Ceramlc oder aus Glas verwendet werden. Dabei können legierte und unleglerte Stähle zur Anwendung kommen. Als Ceramic kommt beispielsweise Zirkonoxid zur Anwendung.

Dabei können die Bauteilkanten verschiedene Winkel, z.B. 45° oder 90° aufweisen. Entsprechend beschaffene Kanten können beispielsweise Schaufelkanten von Verdichter- und/oder Turbinenschaufeln oder auch Kanten an Schaufelfüßen sein. Durch die prozessstabile Herstellung mit dem erfindungsgemäßen Verfahren nach Patentanspruch 1 wird eine Materialverschiebung der verfestigten Bereiche praktisch vermieden. Für die Fertigung ist hier eine Minimalangabe der Kanten bzw. der Radiengeometrie ausreichend.

Weitere die Erfindung verbessernde Maßnahmen sind in den Unteransprüchen angegeben und werden nachstehend gemeinsam mit der Beschreibung eines bevorzugten Ausführungsbeispiels der Erfindung anhand der Figuren näher dargesteilt. Es zeigt:

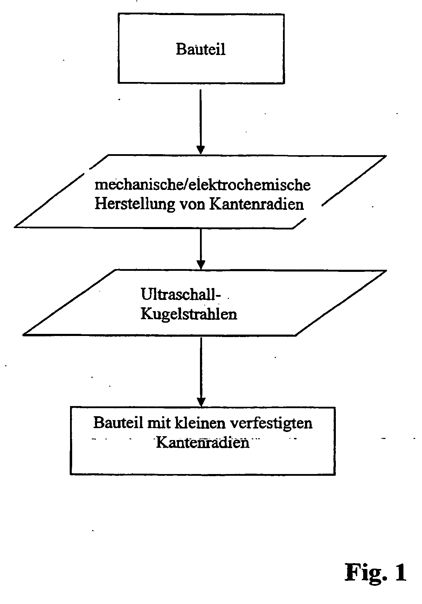

- Fig. 1: ein Flussdiagramm einer ersten Ausführungsform eines erfindungemäßen Verfahrens.

Figur 1 zeigt ein Flussdiagramm einer ersten Ausführungsform eines erfindungemäßen Verfahrens bei dem ein metallisches Bauteil zur Bearbeitung vorgesehen ist. Insbesondere bei Schaufeln von Turbomaschinen kommen hochwertige Legierungen, z.B. Nickel-Basis-Legierungen, zur Anwendung. Ferner weisen diese Schaufelbauteile häufig so genannte Tannenbaumfüße mit mehreren Kanten auf. Verfahrensgemäß wird das Bauten zunächst mechanisch, beispielsweise durch spanabhebende Bearbeitung oder Schleifen, bzw. elektrochemisch, beispielsweise durch Erodieren bearbeitet. Dabei werden entsprechende Kanten hergestellt bzw. überarbeitet.

Im nächsten Verfahrensschritt wird das Bauteil an eine Ultraschallkugelstrahlstation übergehen. Hier wird das Bauteil je nach Größe in ein Gehäuse mit von 15 mm³ bis 8 m³ eingebracht. Dann werden die kleinsten Radien von 0,05 mm durch Ultraschallkugelstrahlen verfestigt. Der Strahivorgang dauert dabei etwa 1 min bis 5 min. Bei dem beschriebenen Ultraschallkugelstrahlen emitiert ein piezoelektrischer Wandler Ultraschallwellen mit einer einstellbaren Frequenz von 18 kHz bis 20 kHz. Im Gehäuse der Ultraschallkugelstrahlvorrichtung befinden sich neben dem Bauteil Ideale Stahikugeln, d.h. Kugeln mit Kugellagerqualität und einer Härte von etwa 70 HRC, mit einer Kugelgröße von 0,3 mm bis 2 mm. Die Schallwellen werden verstärkt wenn sie durch einen Akustikverstärker in ein Gehäuse mit den zu bearbeitenden Bauteilen und Kugellagerkugeln laufen. Die durch die Ultraschallwellen mit einer Vibrationswelle von 40 µm angeregten Kugeln treffen auf die vibrierenden Wänden und werden von deren Oberflächen reflektiert. Die Kugeln kollidieren miteinander und werden wie Gasmolekühle ungeordnet in dem Gehäuse verstreut, Dadurch wird eine reproduzierbare homogene Verfestigung der Kanten und Radien erreicht. Die Bauteile selbst berühren dabei die Gehäusewände nicht.

Hierdurch wird ein Bauteil mit kleinsten verfestigten Kantenradien von 0,05 mm erzeugt. Bei Triebwerksschaufelfüßen wird der Tragflächenanteil hlerdurch deutlich erhöht.

Das erfindungsgemäße Verfahren ist prinzipiell bei allen Arten von Bautellen und insbesondere Turbomaschinenschaufeln anwendbar, sei es bei Gehäusen, Scheiben, Ringen, Verdichtern, Pumpen und Turbinen in Axial-, Diagonal- und Radialbauweise.

## Patentansprüche

1. Verfahren zum Herstellen von metallischen Bauteilen, insbesondere für Turbomaschinen, mit Kantenradien < 0,3 mm, wobei ein Bauteil mechanisch und/ oder elektrochemisch unter Erstellung mindestens eines Kantenradius < 0,3 mm bearbeitet wird, und der mindestens eine Kantenradius < 0,3 mm durch Ultraschall-Kugelstrahlen verfestigt wird, **dadurch gekennzeichnet, dass** das Bauteil in Bereichen, die verfestigungsgestrahlt werden, mit zu verfestigenden Kantenradien ≥ 0,05 mm versehen wird.

2. Verfahren zum Herstellen von metallischen Bauteilen nach Patentanspruch 1, wobei beim Ultraschall-Kugelstrahlen eine Frequenz von 18 kHz bis 20 kHz Verwendung findet.

3. Verfahren zum Herstellen von metallischen Bauteilen nach Patentanspruch 1, wobei beim Ultraschall-Kugelstrahlen eine vibrationsamplitude von 40 - 8.0 µm Verwendung findet.

4. Verfahren zum Herstellen von metallischen Bauteilen nach Patentanspruch 1, wobei die Dauer des Ultraschall-Kugelstrahlens pro Strahlbereich 20 sek. bis 30 min, vorzugsweise 5 min bis 15 min beträgt.

5. Verfahren zum Herstellen von metallischen Bauteilen nach Patentanspruch 1, wobei beim Ultraschall-Kugelstrahlen eine Kugelgröße von 0,3 mm bis 2 mm Verwendung findet.

6. Verfahren zum Herstellen von metallischen Bauteilen nach Patentanspruch 1, wobei beim Ultraschall-Kugelstrahlen eine Kugelhärte von bis zu 70 HRC Verwendung findet.

7. Verfahren zum Herstellen von metallischen Bauteilen nach Patentanspruch 1, wobei beim Ultraschall-Kugelstrahlen eine Kugelmasse von 1 g bis 100 g pro Baurteil Verwendung findet.

8. Verfahren zum Herstellen von metallischen Bauteilen nach Patentanspruch 1, wobei die zu verfestigenden Bauteile in ein Gehäuse eingelegt/eingespannt werden.

9. Verfahren zum Herstellen von metallischen Bauteilen nach Patentanspruch 8, wobei das Gehäuse ein Volumen von 15 mm³ bis 8 m³, vorzugsweise von 1 m³ bis 3 m³ aufweist.

10. Verfahren zum Herstellen von metallischen Bauteilen nach Patentanspruch 1, wobei beim Ultraschall-Kugelstrahlen Kugeln aus Stahl, aus Wolframcarbid, aus Ceramic oder aus Glas verwendet werden.

## Claims

1. Method for producing metallic components, in particular for turbo-engines, having edge radii < 0.3 mm, wherein a component is worked mechanically and/or electrochemically, creating at least one edge radius < 0.3 mm, and the at least one edge radius < 0.3 mm is consolidated by ultrasonic shot-peening,
**characterized in that**
in regions that undergo consolidation by peening the component is provided with edge radii ≥ 0.05 mm that are to be consolidated.

2. Method for producing metallic components according to claim 1, wherein a frequency of 18 kHz to 20 kHz is used during the ultrasonic shot-peening.

3. Method for producing metallic components according to claim 1, wherein a vibration amplitude of 40 - 80 µm is used during the ultrasonic shot-peening.

4. Method for producing metallic components according to claim 1, wherein the duration of the ultrasonic shot-peening per peening region amounts to 20 sec to 30 min, preferably 5 min to 15 min.

5. Method for producing metallic components according to claim 1, wherein a sphere size of 0.3 mm to 2 mm is used during the ultrasonic shot-peening.

6. Method for producing metallic components according to claim 1, wherein a sphere hardness of up to 70 HRC is used during the ultrasonic shot-peening.

7. Method for producing metallic components according to claim 1, wherein a sphere mass of 1 g to 100 g per component is used during the ultrasonic shot-peening.

8. Method for producing metallic components according to claim 1, wherein the components to be consolidated are laid/clamped in a housing.

9. Method for producing metallic components according to claim 8, wherein the housing has a volume of 15 mm³ to 8 m³, preferably of 1 m³ to 3 m³ .

10. Method for producing metallic components according to claim 1, wherein spheres made from steel, from tungsten carbide, from ceramic or from glass are used during the ultrasonic shot-peening.

## Revendications

1. Procédé de fabrication de pièces métalliques, en particulier pour des turbomachines, avec des rayons d'arête < 0,3 mm, dans lequel on usine une pièce par voie mécanique et /ou électrochimique en créant au moins un rayon d'arête < 0,3 mm, et on écrouit ledit au moins un rayon d'arête < 0,3 mm par grenaillage ultrasonore, **caractérisé en ce que** l'on munit la pièce de rayons d'arête à écrouir ≥ 0,05 mm dans des régions qui sont soumises à un grenaillage d'écrouissage.

2. Procédé de fabrication de pièces métalliques selon la revendication 1, dans lequel on utilise lors du grenaillage ultrasonore une fréquence de 18 kHz à 20 kHz.

3. Procédé de fabrication de pièces métalliques selon la revendication 1, dans lequel on utilise lors du grenaillage ultrasonore une amplitude de vibration de 40 à 80 µm.

4. Procédé de fabrication de pièces métalliques selon la revendication 1, dans lequel la durée du grenaillage ultrasonore par zone de grenaillage est de 20 s à 30 min, de préférence de 5 min à 15 min.

5. Procédé de fabrication de pièces métalliques selon la revendication 1, dans lequel on utilise lors du grenaillage ultrasonore une taille de billes de 0,3 mm à 2 mm.

6. Procédé de fabrication de pièces métalliques selon la revendication 1, dans lequel on utilise lors du grenaillage ultrasonore une dureté de billes valant jusque 70 HRC.

7. Procédé de fabrication de pièces métalliques selon la revendication 1, dans lequel on utilise lors du grenaillage ultrasonore une masse de billes de 1 g à 100 g par pièce.

8. Procédé de fabrication de pièces métalliques selon la revendication 1, dans lequel on introduit/serre les pièces à écrouir dans une enceinte.

9. Procédé de fabrication de pièces métalliques selon la revendication 8, dans lequel l'enceinte présente un volume de 15 mm³ à 8 m³, de préférence de 1 m³ à 3 m³.

10. Procédé de fabrication de pièces métalliques selon la revendication 1, dans lequel on utilise lors du grenaillage ultrasonore des billes en acier, en carbure de tungstène, en céramique ou en verre.
